# EUROPEAN PATENT SPECIFICATION

(11) **EP 0 616 715 B1**
(45) Date of publication and mention of the grant of the patent: **04.03.1998**
(21) Application number: 93922032.3
(22) Date of filing: 08.10.1993
(51) Int. Cl.: G09B 5/04, G09F 25/00

(54) **EXHIBITION APPARATUS**
AUSSTELLUNGSVORRICHTUNG
DISPOSITIF POUR EXPOSITION

(30) Priority: 09.10.1992 GB 9221270
(43) Date of publication of application: 28.09.1994
(73) Proprietor: ARTS COMMUNICATION & TECHNOLOGY LTD., Midhurst, W. Sussex GU29 OJN (GB)
(72) Inventor: RICE, Paul, Louis, London NW3 (GB); RICE, Ian Noel, Hampstead, London NW3 1AJ (GB)
(74) Representative: Frankland, Nigel Howard
(86) International application number: GB9302087
(87) International publication number: WO9409465

(56) References cited:
- EP-A- 0 389 261
- DE-U- 9 107 529
- FR-A- 2 661 032
- FR-A- 2 665 288

## Description

THE PRESENT INVENTION relates to exhibition apparatus.

FR-A-2 665 288 discloses an exhibition comprising a plurality of exhibits and an apparatus comprising a compact disc in a compact disc deck associated with means to provide an audible output and means provided to control operation of the compact disc deck.

In this Specification the term "exhibition" is to be given a wide meaning and is intended to embrace any type of exhibition where a number of different items are exhibited which are to be viewed by people attending the exhibition. Thus an exhibition may comprise an art gallery where the exhibits to be viewed comprise pictures or paintings, a zoo where the items to be exhibited comprise animals, cr a museum where the exhibits may comprise any type of artefact or display item. A further example of an exhibition may be botanical garden where the exhibits comprise different plants.

For a person visiting an exhibition to obtain the maximum benefit, the person should be provided with information concerning each exhibit. This can be achieved by providing a Guide Book, but if the exhibition is of a significant size, the Guide Book will be bulky and also it is difficult to look at an exhibit whilst simultaneously reading a Guide Book.

The present invention seeks to provide apparatus for use at exhibitions, and an exhibition utilising such apparatus.

According to one aspect of this invention there is provided an exhibition comprising a plurality of exhibits, indicia means identifying at least some of the exhibits, and at least one apparatus comprising a compact disc deck associated with means to provide an audible output, means being provided to control operation of the compact disc deck, said control means incorporating or being associated with a keyboard operable to input the identity of a track present on a compact disc which is to be played, there being a compact disc in the compact disc deck so that when the indicium from an exhibit is input to the apparatus through the keyboard an audible commentary relating to the exhibit identified by that indicium is provided.

Preferably the keyboard is a numeric keyboard operable to provide a reference number identifying a track to be played, each indicia comprising a reference number.

Conveniently the display apparatus incorporates a display associated with the keyboard adapted to display the number keyed into the apparatus.

Advantageously the keyboard is associated with a micro-processor which forms part of the apparatus.

Conveniently memory means are provided within the apparatus, means being provided to transfer from a compact disc in the compact disc deck to the memory data present on the compact disc, the memory acting as a program memory for the micro-processor.

Advantageously means are provided for processing compressed data present in the compact disc deck, said means being selectively operable when such compressed data is present.

In order that the invention may be more readily understood, and so that further features thereof may be appreciated, the invention will now be described, by way of example, with reference to the drawings in which
FIGURE 1 is a diagrammatic perspective view illustrating a person present at an exhibition carrying a hand-held apparatus to provide a commentary on items being exhibited,
FIGURE 2 is an enlarged view of the hand-held apparatus, and
FIGURE 3 is a block diagram of the operational parts of the hand-held apparatus.

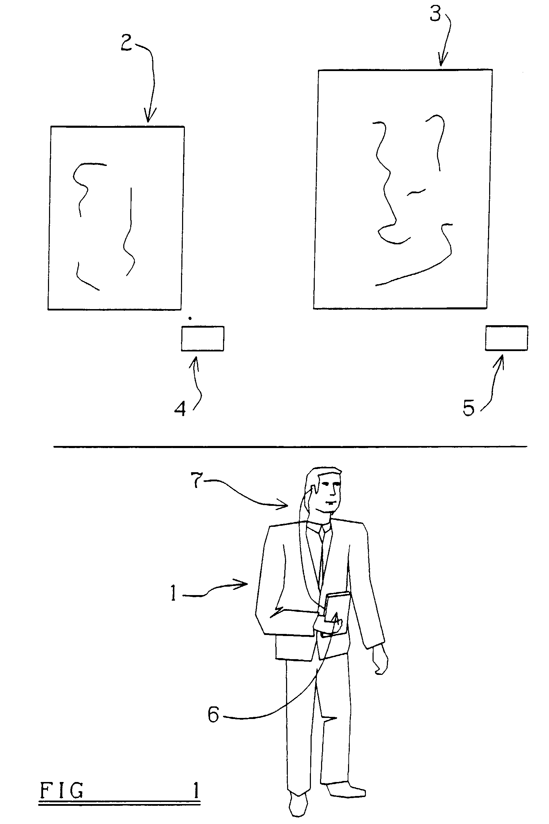

Referring to the drawings, a person 1 is illustrated in Figure 1 present at an exhibition. Various items are being exhibited, and two pictures 2,3 are illustrated. Each picture is associated with a small plaque 4,5 which carries a reference number identifying the particular exhibit.

The person 1 is carrying a hand-held apparatus 6 which will be described in greater detail hereinafter, the apparatus 6 being associated with an ear-piece 7.

The apparatus 6 is provided with a keyboard enabling the person 1 to enter into the apparatus, a reference number shown on the plaque 4 associated with the exhibit 2. The hand-held apparatus will then provide an audible commentary through the ear-piece 7 relating to the picture 2 associated with the plaque 4. At any time the person 1 may terminate the commentary on the picture 2 and may then, for example, enter the number present on the plaque 5 to initiate a commentary on the picture 3.

It is thus to be understood that the hand-held apparatus 6 can be utilised to provide an immediate commentary on any exhibit present within an exhibition. The commentary is an audible commentary which means that the commentary can be considered while the particular exhibit is being viewed. This facilitates a thorough understanding of the commentary and the exhibit. The exhibits may be viewed and the commentaries may be heard in any selected order. It is not necessary for the commentary relating to every exhibit to be heard.

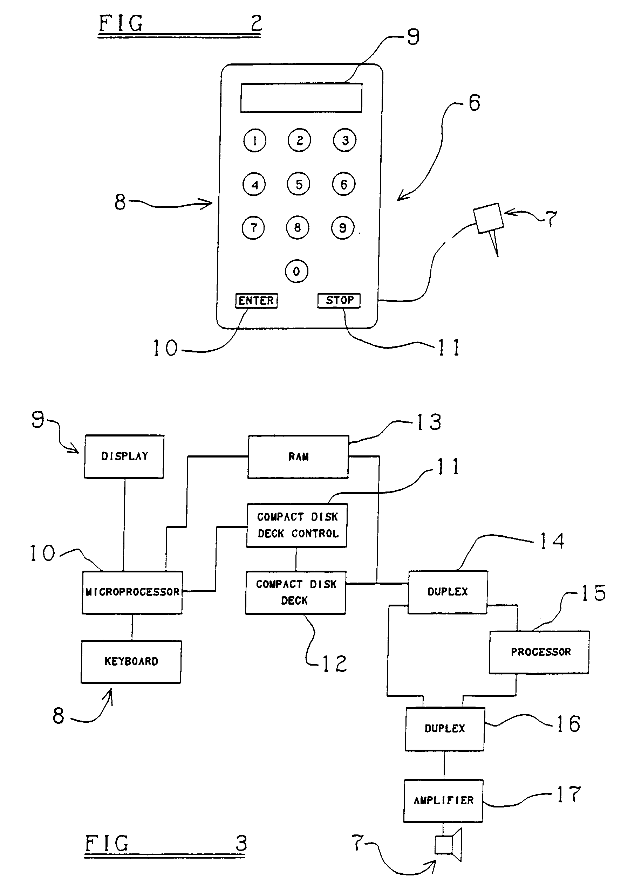

Figure 2 illustrates the hand-held apparatus 6. The apparatus effectively comprises a player adapted to play a compact disc upon which the appropriate data relating to the ccmmentaries is stored. The apparatus 6 is provided with a key-pad 8, a liquid crystal display 9, and further control buttons such as a "enter" button 10 and a "stop" button 11. The ear-piece 7 is connected to the device.

In operation of the device a person will enter, using the key-pad, a number present on a plaque such as the plaque 4. As the various digits of the reference number are keyed in using the key-pad 8, the digits will appear on the liquid crystal display 9. When the correct number is shown in the display 9 the "enter" button may be pressed. The appropriate commentary is then supplied through the ear-piece 7. At any time the "stop" button may be pressed which serves the dual function of clearing the data present on the display 9, which means that the "stop" button may be pressed if an incorrect number is pressed when operating the key-pad 8, and also the "stop" will serve the function of terminating the commentary if the person utilising the apparatus feels that the commentary is over-lengthy.

Turning now to Figure 3, it can be seen that the keyboard 8 and the display 9 are each associated with a micro-processor 10 which performs an essential control function within the apparatus 6. The micro-processor 10 is connected to provide control signals to a compact disc deck control arrangement 11 which controls a compact disc deck 12. The output of the compact disc deck is connected to a random access memory 13 which is also connected to the micro-processor 10 and is also connected to a duplex 14 having two outputs comprising two alternate channels. One channel passes through a processor 15 to a second duplex 16 where the channels are recombined, and the other output of the duplex 14 passes directly to the duplex 16. The processor 15 is adapted to process compressed signals derived from compressed data stored on the compact disc in order to re-create, from the compressed data, audible conventional sound.

The output of the duplex 16 passes through an appropriate amplifier 17 to the ear-piece 7.

It is to be appreciated that when the apparatus described above is to be utilised in any particular exhibition, initially one or more compact discs will be prepared carrying, on a plurality of separate "tracks" the commentary relating to the various exhibits. The tracks may be of different length, since the commentary for some exhibits may be much shorter than the commentary for other exhibits. Thus, in order to facilitate the control of the apparatus by the micro-processor, the compact disc contains an initial track which contains programme information defining the precise location of all the tracks on the disc, and other information necessary to enable the micro-processor to control the apparatus adequately in response to control signals received from the keyboard. Consequently, the arrangement is such that whenever a compact disc is inserted into the apparatus, the first track present on the compact disc is read automatically and the information obtained from that track on the compact disc is supplied to the random access memory 13. The random access memory 13 thus acts as a programme memory for the micro-processor 10.

When a person operates the keyboard to key-in a number present on a plaque, such as the plaque 4, the appropriate signal is passed by the micro-processor 10 to the compact disc deck control 11, so that the appropriate track on the compact disc is selected and played. At this stage the display 9 may continue to display the number present on the plaque identifying the exhibit and/or may display other information such as the length of the commentary and/or the remaining duration of the commentary.

If the data present on the disc is in conventional or non-compressed form, the output signal from the compact disc deck passes directly from duplex 14 to duplex 16 and thus through the amplifier 17 to the ear-piece 7. When the data present on the compact disc is of a compressed form an appropriate control signal is generated so that the signal passes from duplex 14 to the processor 15 and thence to the duplex 16 so that an audible and comprehensible output signal is produced by the amplifier 17.

The audible commentary may comprise the spoken word but may also comprise other sounds. For example, if the exhibition is an exhibition of paintings, if a particular painting illustrates a ship at sea, the commentary may include sounds such as one may expect to hear when on a ship at sea. If the exhibition is a zoo the commentary may include sounds corresponding to the sounds that the particular animal being considered would be expected to make.

It is to be appreciated that a person entering an exhibition would be provided with the hand-held apparatus as described above and one or more compact discs carrying the relevant information. Different sets of compact discs could be easily provided in different languages, thus enabling any person attending the exhibition to be provided with a commentary in a language that they understand. If two or more compact discs have to be provided, because the information necessary to provide a full commentary on all the exhibits in the exhibition cannot be carried on a single compact disc, the compact discs may be colour-coded, with the plaques identifying the various exhibits also being colour-coded. Of course, all the plaques in each room or each area of the exhibition would be of the same colour, so that a person could initially examine all the exhibits where the commentary is on a first disc, and then change discs before studying the exhibits where the commentary is present on a second disc, and so on.

Whilst the invention has been described with reference to one particular embodiment of the invention it is to be appreciated that many modifications may be effected without departing from the scope of the invention. For example, the apparatus 6 may not be hand-held, but be provided with a shoulder-strap or a clip to enable the apparatus to be clipped directly on to an item of clothing. The ear-piece 7 may be replaced by head-phones or by a "wand" carrying a small loudspeaker. This would enable a group of people to listen simultaneously to the commentary on any particular item, meaning that only one apparatus would have to be provided for each group of people visiting the exhibition, rather than a separate item of apparatus being provided for every person attending the exhibition.

## Claims

1. An exhibition comprising a plurality of exhibits, indicia means identifying at least some of the exhibits, and at least one apparatus comprising a compact disc deck associated with means to provide an audible output, means being provided to control operation of the compact disc deck, said control means incorporating or being associated with a keyboard operable to input the identity of a track present on a compact disc which is to be played, there being a compact disc in the compact disc deck so that when the indicium from an exhibit is input to the apparatus through the keyboard an audible commentary relating to the exhibit identified by that indicium is provided.

2. An exhibition according to Claim 1 wherein the keyboard is a numeric keyboard operable to provide a reference number identifying a track to be played, each indicia comprising a reference number.

3. An exhibition according to Claim 2 wherein the apparatus incorporates a display associated with the keyboard adapted to display the number keyed into the apparatus.

4. An exhibition according to any one of the preceding Claims wherein the keyboard is associated with a micro-processor which forms part of the apparatus.

5. An exhibition according to any one of the preceding Claims wherein memory means are provided within the apparatus, means being provided to transfer from a compact disc in the compact disc deck to the memory data present on the compact disc, the memory acting as a program memory for the micro-processor.

6. An exhibition according to any one of the preceding Claims wherein means are provided within the apparatus for processing compressed data present in the compact disc deck, said means being selectively operable when such compressed data is present.

## Patentansprüche

1. Eine Ausstellung mit mehreren Ausstellungsstücken, wobei Kennzeichnungseinrichtungen wenigstens einige der Ausstellungsstücke identifizieren, und wenigstens einer Vorrichtung mit einem Compact Disc-Laufwerk, das mit einer Einrichtung zum Liefern einer Audio-Ausgabe verbunden ist, wobei eine Einrichtung zum Steuern des Betriebs des Compact Disc-Laufwerkes vorgesehen ist, ferner die Steuereinrichtung eine Tastatur einschließt oder damit verbunden ist, die zum Eingeben der Identität einer auf einer Compact Disc vorhandenen Spur, die abzuspielen ist, einsetzbar ist, wobei sich in dem Compact Disc-Laufwerk eine Compact Disc befindet, so daß, wenn das Kennzeichen von einem Ausstellungsstück über die Tastatur in die Vorrichtung eingegeben wird, ein hörbarer Kommentar, der sich auf das durch das Kennzeichen identifizierte Ausstellungsstück bezieht, geliefert wird.

2. Eine Ausstellung nach Anspruch 1, worin die Tastatur eine Zifferntastatur ist, die zum Liefern einer eine abzuspielende Spur identifizierenden Bezugsnummer einsetzbar ist, wobei jedes Kennzeichen eine Bezugsnummer umfaßt.

3. Eine Ausstellung nach Anspruch 2, worin die Vorrichtung eine mit der Tastatur verbundene Anzeige einschließt, die geeignet ist, um die in die Vorrichtung eingegebene Nummer anzuzeigen.

4. Eine Ausstellung nach irgendeinem der vorangehenden Ansprüche, worin die Tastatur mit einem Mikroprozessor verbunden ist, der einen Teil der Vorrichtung bildet.

5. Eine Ausstellung nach irgendeinem der vorangehenden Ansprüche, worin Speichereinrichtungen in der Vorrichtung vorgesehen sind, wobei eine Einrichtung zum Übertragen von auf der Compact Disc vorhandenen Daten von einer Compact Disc in dem Compact Disc-Laufwerk zu einem Speicher vorgesehen ist, wobei der Speicher als ein Programmspeicher für den Mikroprozessor wirkt.

6. Eine Ausstellung nach irgendeinem der vorangehenden Ansprüche, worin Einrichtungen zum Verarbeiten von in dem Compact Disc-Lauf vorhandenen komprimierten Daten in der Vorrichtung vorgesehen sind, wobei die Einrichtungen wahlweise betreibbar sind, wenn derartige komprimierte Daten vorliegen.

## Revendications

1. Système de présentation comprenant une pluralité d'articles de présentation, des moyens d'indexation identifiant au moins certains des articles de présentation, et au moins un appareil comprenant un lecteur de disques compacts associé a des moyens de délivrance d'une sortie sonore, des moyens étant fournis pour commander le fonctionnement du lecteur de disques compacts, lesdits moyens de commande incorporant ou étant associés à un clavier activé pour entrer l'identité d'une piste présente sur un disque compact qui doit être lue, un disque compact se trouvant dans le lecteur de disques compacts de telle sorte que lorsque l'index d'un article de présentation est entré dans l'appareil par le biais du clavier, un commentaire sonore concernant l'article de présentation identifié par cet index soit fourni.

2. Système de présentation selon la revendication 1, dans lequel le clavier est un clavier numérique activé pour fournir un numéro de référence identifiant une piste à lire, chaque index comprenant un numéro de référence.

3. Système de présentation selon la revendication 2, dans lequel l'appareil incorpore un affichage associé au clavier adapté pour afficher le numéro saisi dans l'appareil.

4. Système de présentation selon l'une quelconque des revendications précédentes, dans lequel le clavier est associé à un microprocesseur qui fait partie de l'appareil.

5. Système de présentation selon l'une quelconque des revendications précédentes, dans lequel des moyens de mémoire sont prévus à l'intérieur de l'appareil, des moyens étant prévus pour transférer d'un disque compact, se trouvant dans le lecteur de disques compacts, à la mémoire de données présentes sur le disque compact, la mémoire servant de mémoire de programmation pour le microprocesseur.

6. Système de présentation selon l'une quelconque des revendications précédentes, dans lequel des moyens sont prévus à l'intérieur de l'appareil pour traiter les données condensées présentes dans le lecteur de disques compacts, lesdits moyens étant sélectivement activés quand de telles données condensées sont présentes.
